Europäisches Patentamt

European Patent Office

Office européen des brevets

(11) Numéro de publication: **0 039 645**
**B1**

## FASCICULE DE BREVET EUROPEEN

(45) Date de publication du fascicule du brevet: **12.09.84**

(51) Int. Cl.³: **D 06 F 58/28, G 05 B 19/10**

(21) Numéro de dépôt: **81400705.0**

(22) Date de dépôt: **05.05.81**

(54) **Sèche-linge à programmateur électronique.**

(30) Priorité: **06.05.80 FR 8010088**

(43) Date de publication de la demande:
**11.11.81 Bulletin 81/45**

(45) Mention de la délivrance du brevet:
**12.09.84 Bulletin 84/37**

(84) Etats contractants désignés:
**BE DE FR GB**

(56) Documents cités:
**EP-A-0 000 957**
**DE-A-1 785 613**
**DE-A-2 200 019**
**DE-A-2 530 580**
**DE-A-2 813 144**
**DE-A-2 941 166**
**FR-A-2 424 325**
**FR-A-2 438 838**
**FR-A-2 444 742**
**US-A-3 417 480**
**US-A-3 599 342**

(73) Titulaire: **THOMSON-BRANDT**
**173, Boulevard Haussmann**
**F-75379 Paris Cedex 08 (FR)**

(72) Inventeur: **Gas, Jean-Claude**
**THOMSON-CSF SCPI 173, bld Haussmann**
**F-75360 Paris Cedex 08 (FR)**
Inventeur: **Payen, Michel**
**THOMSON-CSF SCPI 173, bld Haussmann**
**F-75360 Paris Cedex 08 (FR)**

(74) Mandataire: **Grynwald, Albert et al**
**THOMSON-CSF SCPI 173, Bld Haussmann**
**F-75379 Paris Cedex 08 (FR)**

(56) Documents cités:
**THE RADIO AND ELECTRONIC ENGINEER, vol. 32, décembre 1966, no. 6, Londres, GB W.P. GABRIEL et al. "A new system for digital setting of temperature and humidity controllers". pages 383-387**
**J.P. PEATMAN: "Microcomputer-based design", 1977 McGraw Hill, New York, US page 386**

Courier Press, Leamington Spa, England.

## Description

La présente invention concerne un sèche-linge à tambour tournant et à programmateur électronique, particulièrement performant tout en étant très simple à manipuler pour ses utilisateurs.

Les sèche-linge à tambour tournant dans lesquels le linge mouillé, introduit dans le tambour tournant, est séché par une circulation d'air chaud dans le tambour sont déjà bien connus maintenant.

Leur programmation se fait généralement par des programmateurs électromécaniques classiques qui déterminent par exemple la durée du cycle de séchage et/ou le degré d'humidité finale que l'on désire obtenir selon qu'il s'agit d'avoir par exemple du linge sec prêt à ranger ou du linge plus ou moins humide prêt à être repassé.

Les séche-linge où la commande du cycle de séchage ne se ferait que par un choix prédéterminé de la durée de sèchage proprement dit, c'est-à-dire de la durée de circulation d'air chaud dans le tambour seraient bien entendu particulièrement simples à programmer, mais seraient très peu élaborés et ne conduiraient pas à une bonne souplesse d'usage.

Des sèche-linge plus élaborés sont bien connus à ce jour, dans lesquels la fin du cycle de séchage proprement dit est commandée à partir d'une mesure de l'humidité restant dans le linge, et comparaison de cette mesure à des valeurs de référence prédéterminées définies par des circuits électroniques analogiques associés au programmateur du sèche-linge. Lorsque le programmateur a été mis sur une position particulière correspondant à l'une de ces valeurs de référence prédéterminées, le signal correspondant à la mesure d'humidité restant dans le linge est en permanence comparé à ces valeurs et un interrupteur électronique, actionné lorsqu'il y a coïncidence entre la valeur mesurée et la valeur de référence choisie, interrompt le sèchage.

Il est connu de réaliser la mesure de l'humidité restant dans le linge par l'une ou l'autre des deux méthodes suivantes.

Une première méthode consiste à mesurer la résistance électrique du linge. Pour cela on fait passer un faible courant à travers le linge mouillé entre deux points isolés du tambour. La résistance du linge est d'autant plus élevée qu'il est plus sec.

Une deuxième méthode consiste à mesurer la température de l'air sortant du tambour. En effet, cet air qui entre chaud dans le tambour, ayant été préalablement chauffé par une résistance chauffante, se refroidit par l'humidité qu'il prélève au linge et entraîne avec lui. Ainsi, plus l'air sortant du tambour est chaud, plus le linge est sec. Il suffit de disposer une thermistance dans le circuit de l'air de sortie et de mesurer la tension à ses bornes pour obtenir une valeur indiquant la température de l'air et donc le degré de séchage du linge.

Il est également connu de combiner ces deux méthodes pour obtenir un meilleur contrôle du séchage du linge. Le document FR—A—2 437 559 déposé le 29 septembre 1978 par la Demanderesse pour un "dispositif de détection d'humidité et de commande d'un séchoir à linge à tambour décrit un sèche-linge utilisant cette combinaison des deux méthodes qui présente un avantage important par le fait que la méthode de mesure de température de l'air de sortie est plus intéressante pour le contrôle de pourcentages d'humidité peu élevés correspondant par exemple aux appellations traditionnelles "sec" et "ultra-sec", tandis que la méthode de mesure de résistance du linge est plus intéressant pour détecter des pourcentages d'humidité plus importantes tels que: 5%, 10% et 20% qui sont des valeurs classiques de tels pourcentages obtenus après séchage.

Dans ce document FR—A—2 437 559 avait été décrits et revendiqués un circuit analogique de détection et de mesure des pourcentages d'humidité par ces deux méthodes et de commande de la fin du cycle de sèchage lorsque le pourcentage choisi était atteint.

La présente invention concerne un sèche-linge à tambour tournant utilisant au moins cette même combinaison des deux méthodes, mais en l'adaptant à une programmation électronique basée sur l'utilisation d'un microprocesseur, et en la complétant et l'assouplissant grâce à cette programmation électronique.

Il faut en effet noter qui si l'on connait déjà des machines à laver le linge ou la vaisselle à programmateur électronique, on ne semble pas encore connaître de sèche-linge à programmateur électronique. Or les techniques des machines à laver et des sèche-linge sont très différentes, de même que le sont les paramètres entrant en linge de compte pour l'élaboration des différents programmes. En effet, dans les machines à laver, que ce soit le linge ou la vaisselle il faut savoir contrôler des quantités d'eau et de produits de lavage à introduire, des températures d'eau de lavage, des vitesses de rotation de tambour...; dans un sèche-linge les paramètres à contrôler sont complétement différents puisqu'il s'agit essentiellement de mesurer tout au long du séchage le pourcentage d'humidité dans le linge. Il résulte de ces différences importantes des paramètres à faire intervenir des différences non moins importantes des moyens permettant de réaliser la programmation électronique, ces moyens étant, de plus, fonctions, dans la présente invention, de l'utilisation combinée de deux méthodes de mesure de l'humidité.

Selon la présente invention, un sèche-linge à tambour dans lequel est envoyé de l'air chaud pendant le cycle de séchage proprement dit, et utilisant, pour déterminer le pourcentage d'humidité restant dans le linge et arrêter, lorsqu'est atteint un pourcentage prédéterminé choisi, le cycle de séchage proprement dit, la combinaison de deux méthodes, à savoir la mesure de la résistance électrique du linge pour les programmes aboutissant aux pourcentages d'humidité les plus élevés et la mesure de la température de l'air sortant du tambour pour les programmes aboutissant aux pourcentages d'humidité les moins élevés, est caractérisé en ce qu'il est commandé par un programmateur électronique à microprocesseur recevant des ordres d'au moins deux groupes de moyens de sélection de programmes, un premier groupe de moyens de sélection de programmes agissant sur des circuits de mesure de la résistance électrique du linge, et un deuxième groupe de moyens de sélection de programmes agissant sur des circuits de mesure de la température de l'air sortant du tambour, les informations délivrées par les uns ou les autres de ces circuits selon qu'ont été actionnés des moyens de sélection de programmes du premier ou du deuxième groupe, étant utilisées pour commander le fonctionnement des différents organes du sèche-linge et arrêter le cycle de séchage proprement dit lorsqu'est atteint le pourcentage d'humidité choisi.

L'utilisation d'un programmateur électronique pour commander un sèche-linge sur la base de cette combinaison de deux méthodes de mesure d'humidité permet non seulement une grande souplesse et une grande facilité d'emploi du sèche-linge, mais permet encore de réaliser en cours de fonctionnement différents contrôles de sécurité évitant tout risque de chauffage excessif et éventuellement dangereux du linge, ces différentes sécurités étant réalisées de façon simple et peu coûteuse et étant très efficaces.

D'autres objets, caractéristiques et résultats de l'invention ressortiront de la description suivante donnée à titre d'exemple non limitatif et illustrée par les figures annexées qui représentent:

— la figure 1, un schéma synoptique simplifié du sèche-linge à programmation électronique conforme à l'invention;
— la figure 2, une représentation schématique du tableau de commande et l'affichage d'un tel sèche-linge;
— la figure 3, une représentation schématique des principaux circuits associés au microprocesseur du programmateur électronique du sèche-linge selon l'invention.

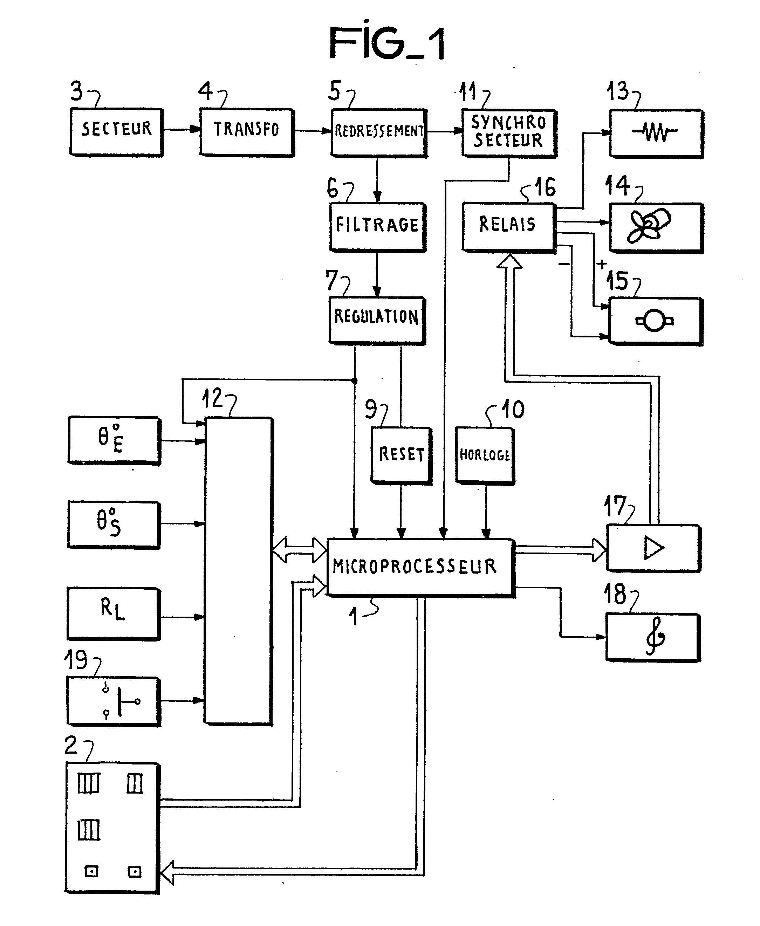

On voit sur la figure 1, de façon schématique, l'organisation générale des différents circuits du programmateur électronique, des organes du sèche-linge qu'il commande, et des organes de détection des différents paramètres à mesurer ou contrôler.

Le microprocesseur 1, par exemple ici un microprocesseur S 2000 AMI, comporte une mémoire morte ROM dans laquelle sont définivement stockées les informations formant les différents programmes que le sèche-linge est susceptible de réaliser sur demande de l'utilisateur actionnant les moyens de sélection, des touches par exemple, à sa disposition sur le clavier de commande 2 du tableau du sèche-linge. Ce microprocesseur comporte en outre une mémoire vive RAM où sont momentanément stockées des données temporaires telles que les choix effectués par l'opérateur au début du cycle de séchage.

Le microprocesseur 1, ainsi que les différents circuits électroniques qui lui sont associés sont classiquement alimentés, à partir du secteur 3, par une tension continu+$V_{cc}$ (+9 volts par exemple) obtenue par l'intermédiaire d'un transformateur 4 suivi d'un circuit de redressement 5, puis d'un circuit de filtrage 6 et d'une régulation 7.

La tension +$V_{cc}$ alimente encore un circuit 9, de "reset" qui est destinée à remettre à zéro l'ensemble des mémoires RAM en cas de coupure du secteur de durée supérieure à une seconde environ et au moment de la mise sous tension de l'appareil. Ce circuit de reset est donc un circuit d'initialisation (au moment de la mise sous tension) ou de réinitialisation (après une coupure brève), et permet d'éviter que des changements d'états parasites de certains éléments logiques du microprocesseur ne viennent fausser les opérations. Il peut être par exemple réalisé conformément au circuit du document FR—A—2 454 137 déposé le 13 avril 1979 par la Demanderesse.

Une horloge 10 et un circuit de synchronisation secteur 11 permettent par ailleurs au microprocesseur 1 de fonctionner convenablement, comme il est bien connu de l'homme de l'art; la synchronisation secteur délivre un signal qui sert d'impulsion de cadencement à la gestion des temps, du multiplexage des afficheurs (LED) et du clavier de commande du tableau de commande.

Le microprocesseur 1 commande, à partir de données venant d'une part du clavier de commande 2 et d'autre part des circuits d'interface mesurant, comme il va être expliqué plus loin, les différents paramètres du séchage, les différents organes assurant le séchage. Ces organes sont notamment la résistance 13 de chauffage de l'air, le ventilateur 14 envoyant l'air à travers le tambour contenant le linge, le moteur 15 tournant alternativement dans un sens (+) et dans l'autre (—) et entraînant le tambour en rotation autour de son axe. Ces trois organes sont commandés par exemple par quatre relais 16 (un pour la résistance, un pour le ventilateur, et un pour chaque sens de rotation do moteur) eux mêmes commandés par l'intermédiaire d'un circuit de puissance 17.

Le microprocesseur 1 commande en outre l'affichage sur le tableau 2, par exemple par des diodes électroluminescentes LED, d'un certain nombre d'informations ainsi qu'éventuellement le fonctionnement d'un signal sonore grâce à une sonnette 18.

Les informations utilisées par les circuits d'interface 12 pour que le microprocesseur 1 puisse effectuer les différents contrôles dont il a la charge sont: la température $\theta°_E$ de l'air entrant dans le tambour; la température $\theta°_S$ de l'air sortant du tambour; la résistance $R_L$ du linge en traitement; le micro-contact de porte 19.

Ce micro-contact de porte 19, qui peut d'ailleurs être directement connecté au microprocesseur sans passer par l'interface 12, assure, en cas d'ouverture de la porte du sèche-linge un arrêt instantané de tous les organes: moteur, ventilateur, chauffage. Mais le programme reste en l'état; c'est-à-dire qu'à la fermeture de la porte le programme continue là où il était à l'ouverture.

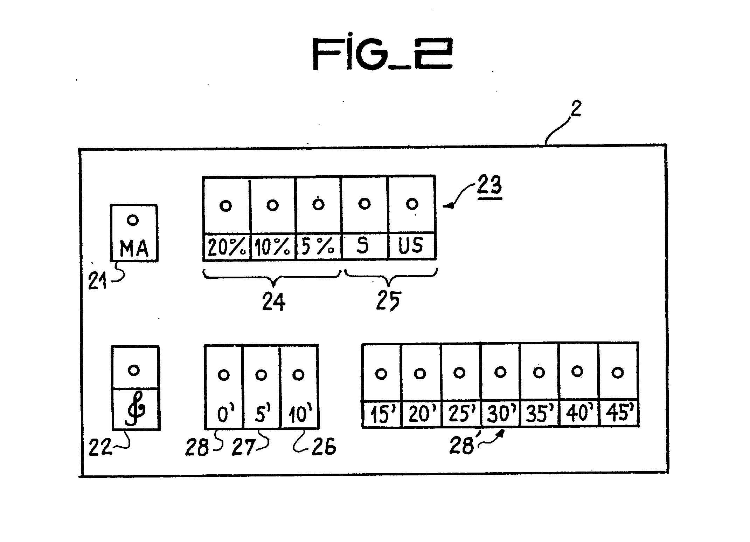

La figure 2 qui représente très schématiquement un exemple des différents éléments qui peuvent se trouver sur le tableau de commande d'un sèche-linge selon l'invention va permettre de comprendre, en liaison avec la figure 1, le fonctionnement général d'un tel sèche-linge.

Ce tableau 20 comporte d'une part des touches qui constituent les moyens de sélection des programmes, et d'autre part des afficheurs, soit des choix effectués, soit de quelques autres information; ces afficheurs sont ici des LED représentées par des petits cercles.

Une touche marche-arrêt (MA) 21 met la machine sous tension. Une touche 22 permet, lorsqu'elle est enfoncée, de neutraliser la sonnette.

Un ensemble de touches 23 permet de choisir des programmes de séchage dont la caractéristique commune est d'être contrôlés par une mesure du pourcentage d'humidité restant dans de linge. Un premier groupe 24 de cet ensemble de touches 23 correspond au contrôle de la résistance du linge; trois touches permettent par exemple d'atteindre respectivement une humidité résiduelle de 20%, 10% et 5%. Le deuxième groupe 25 de cet ensemble 23 correspond au contrôle de la température $\theta°_S$ de l'air sortant du tambour; deux touches permettent par exemple d'atteindre respectivement de qu'on appelle habituellement le "sec" S (0% d'humidité) et "l'ultra-sec" US (<0% d'humidité).

Une définition rapide est donnée ici de ces différentes expressions et pourcentages. Si l'ion considère une charge de linge sec (avant lavage) de 5 kg, cette charge pèsera, après lavage 5+n kg=N kg. C'est cette charge de N kg qui est introduite dans le sèche-linge. Un séchage sur la position "sec" éliminera l'eau jusqu'à ce que la charge revienne approximativement à ses 5 kg d'avant lavage. Un séchage sur la position "ultra-sec" lui fera perdre une partie de l'humidité (prise dans l'atmosphère) que contenaient les 5 kg de linge avant lavage. Un séchage sur les positions 5, 10 ou 20% fera perdre à la charge de N kg un poids tel que la quantité d'eau résiduelle soit égale à 5, 10 ou 20% du poids de la charge de linge sect (soit 5 kg dans l'exemple considéré).

Le cycle de fonctionnement du sèche-linge dont une des cinq touches de cet ensemble 23 a été sélectionnée et enfoncée est le suivant. Tant que le pourcentage d'humidité résiduelle choisi n'est pas atteint, le microprocesseur commande la rotation alternée du tambour dans le courant d'air chauffé par la résistance. Une sécurité permanente fonctionne, elle consiste à mesurer la température de l'air à l'entrée du tambour et à arrêter le chauffage si elle dépasse une valeur de consigne prédéterminée.

Lorsque l'un ou l'autre des circuits d'interface 12 (selon que la touche enfoncée correspond à l'un ou l'autre des deux groupes 24 et 25) indique au microprocesseur que la valeur choisie est atteinte, le microprocesseur commande l'arrêt de l'alimentation de la résistance 13 de chauffage de l'air. Le cycle de séchage proprement dit est alors terminé.

Commence alors de cycle de refroidissement du linge, classique en lui-même dans les sèche-linge à tambour. Le ventilateur envoie dans le tambour qui continue à tourner de l'air non chauffé pendant par exemple 10 mn. Trois afficheurs 26, 27 et 28 du tableau de bord indiquent tour à tour le temps du cycle de refroidissement qui reste encore à s'écouler. La première diode 26 s'allume au début de ce cycle (10 mn), la seconde au bout de 5 mn, indiquant qu'il reste 5 mn et la troisième au bout de 10 mn indiquant que le cycle de refroidissement est terminé. Sont alors allumées, la diode 28 et la diode en l'ensemble 23 correspondant au programme de séchage qui a été choisi.

Lorsque le cycle de refroidissement est terminé, le microprocesseur commande l'arrêt du séchoir et le déclenchement un bref instant, du signal sonore 18, sauf si la touche 22 qui commande sa suppression a été préalablement actionnée.

Dans une réalisation préférée du sèche-linge, commence alors le cycle dit de "défroissage" qui va durer un temps suffisant pour que l'utilisateur vienne arrêter le sèche-linge et en sortir le linge sans que celui-ci se soit à nouveau froissé. En effet, si le linge attendait d'être sorti du sèche-linge alors que le tambour serait immobile, il serait d'autant plus froissé qu'il serait resté plus longtemps immobile et en tas au fond du tambour.

Ce cycle de défroissage où le seul organe en fonctionnement est le moteur (ventilateur et résistance n'étant pas alimentés) évite cet inconvénient tant qu'il se poursuit.

Un bon exemple de durée possible du défroissage est une heure, la sonnette (si elle n'a pas été coupée) fonctionnant par exemple toutes les 2 mn pour avertir l'utilisateur que le linge est prêt.

On voit encore sur la figure 2 un ensemble 28' de, 7 touches et 7 LED associées. Cet ensemble, et ses commandes correspondantes, n'est pas indispensable. Il se trouve dans une réalisation du sèche-linge où, selon une méthode particulièrement simple, le cycle de sèchage proprement dit est commandé par une minuterie. Autrement dit le temps de sèchage est fixe. Toutes les 5 mn la diode correspondant au temps restant à couvrir s'allume; la précédente s'éteint.

De manière générale le programmateur électronique est tel que lorsqu'un programme de sèchage a été choisi par actionnement d'une des touches de l'ensemble *23* le contrôle de la fin du cycle de séchage proprement dit se fait par mesure et envoi au microprocesseur de la seule mesure correspondant au pourcentage d'humidité résiduelle choisi, c'est-à-dire en ne contrôlant qu'un seul paramètre et sans contrôler successivement les différentes étapes correspondant aux pourcentages intermédiaires.

Ceci est vrai à une exception près dans une réalisation préférée. En effet lorsque le programme "sec" ou "ultra-sec" a été sélectionné et que le tambour contient peu de linge, la température de sortie $\theta°_S$ peut être suffisamment élevée pour correspondre à la valeur de consigne de ce programme, sans que le linge soit suffisamment sec. Pour éviter cela, le programme correspondant au "sec" ou à "l'ultra-sec" comporte une vérification automatique de passage par la mesure de la résistance du linge correspondant à 5% d'humidité résiduelle. Tant que la résistance ne sera pas passée par cette valeur, une température de $\theta°_S$ suffisamment élevée n'arrêtera pas le chauffage.

Par ailleurs, de même qu'il existe une sécurité générale sur la température d'entrée $\theta°_E$, il en existe une sur la température de sortie $\theta°_S$. Cette dernière consiste en fait à laisser le programme "ultra-sec" toujours connecté. Ainsi, dès que la température de sortie dépasse la valeur correspondant à l'"'ultra-sec (de l'ordre de 80°C), que ce programme ait, ou non, été sélectionné, le chauffage est arrêté et l'on passe au cycle de refroidissement.

Enfin il est possible de prévoir qu'un programme de test du sèche-linge, à l'usage par exemple des services après-vente, sera enclenché par une commande codée connue de ce seul service et non de l'utilisateur habituel. Cette commande codée peut être par exemple l'actionnement simultané d'au moins deux touches. Il est à noter qu'en dehors de cette possibilité, l'enclenchement d'une touche correspondant à un programme de séchage interdit l'enclenchement ensuite d'un autre, tant que le premier ne s'est pas terminé, et ceci pour éviter des fausses manoeuvres.

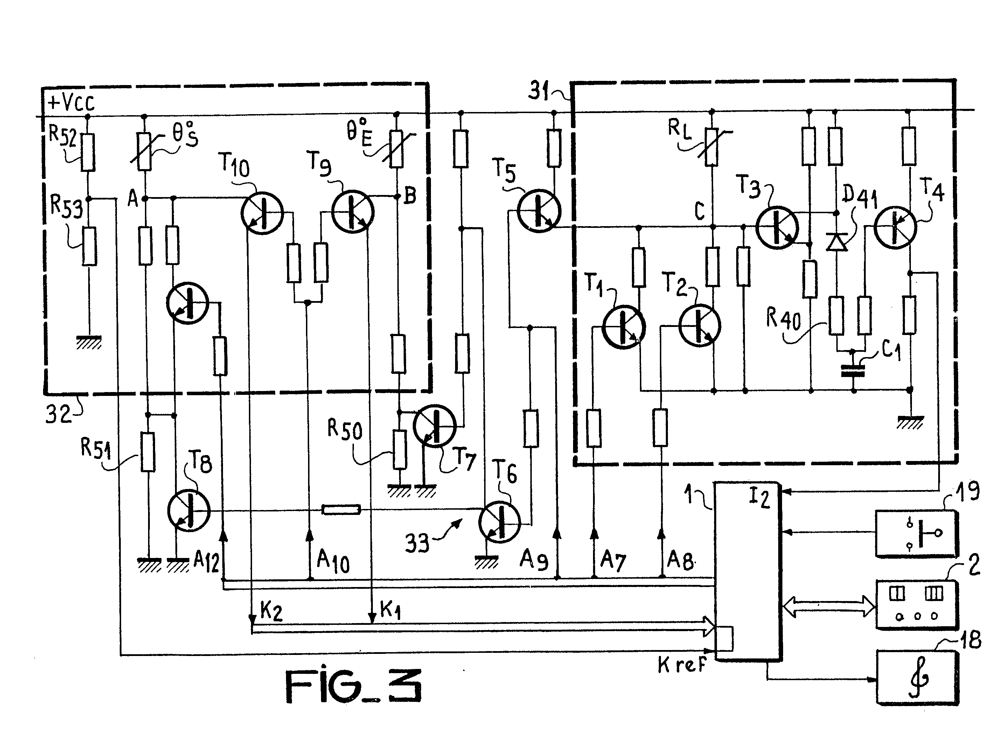

La figure 3 représente plus en détail les circuits d'interface 12 prélevant les informations $\theta°_S$, $\theta°_E$ et $R_L$ sur des détecteurs de ces grandeurs et les transformant en informations utilisables par le microprocesseur 1 pour commander l'arrêt du chauffage, c'est-à-dire l'arrêt du cycle de chauffage proprement dit soit lorsqu'est atteinte la valeur de consigne correspondant au programme choisi, soit lorsqu'un défaut d'un détecteur ou d'un circuit risquerait de provoquer un échauffement anormal voire dangereux du linge.

Cet interface 12 peut être fonctionnellement divisé en trois circuits.

Un premier circuit 31 permet de mesurer la résistance électrique du linge $R_L$ à chaque tour de tambour, cette résistance $R_L$ étant d'autant plus élevée que le linge est plus sec. Ce circuit délivre au microprocesseur, en $I_2$, un signal logique fonction de ce que la valeur d'humidité résiduelle choisie est, ou n'est pas atteinte.

Un deuxième circuit 32 permet de mesurer d'une part la température $\theta°_E$ d'entrée de l'air dans le tambour et sa température $\theta°_S$ de sortie. Ces deux mesures se font au moyen de thermistances à coefficient de température négatif (CTN), c'est-à-dire dont la résistance diminue lorsque la température augmente.

Le microprocesseur 1 utilisé ici étant capable d'effectuer des comparaisons de valeurs analogiques, la mesure des valeurs de consigne se fait par comparaison des valeurs analogiques élaborées dans le circuit 32 et délivrées en $K_1$ et $K_2$ au microprocesseur avec une tension de référence K réf elle-même appliquée au microprocesseur.

Un troisième circuit 33 participant en partie à l'un et à l'autre des circuits 31 et 32 permet de réaliser périodiquement, toutes les secondes par exemple, sur demande du microprocesseur par la connexion $A_9$, un certain nombre de vérifications et de contrôles.

Le circuit 31 ayant à comparer la valeur de la résistance $R_L$ à chaque tour de tambour avec l'une ou l'autre de trois valeurs de consigne (5%, 10%, 20% d'humidité résiduelle par exemple), on effectue régulièrement des mesures comparatives avec un certain nombre (trois dans cet exemple) de ponts de référence mis en série par les transistors $T_1$, $T_2$, qui constituent des interrupteurs commandés respectivement par les sorties $A_7$ et $A_8$ du microprocesseur, en fonction du programme affiché sur le clavier de commande 2.

Lorsque les sorties $A_7$ et $A_8$ du microprocesseur sont au niveau bas ($A_7=0$, $A_8=0$) la valeur de consigne est par exemple 5%; lorsque $A_7=0$ et $A_8=1$ (niveau haut), elle est de par exemple 10%; lorsque $A_7=1$ et $A_8=0$, elle est par exemple de 20%, ces valeurs dépendant bien entendu des valeurs des différentes résistances formant les ponts résistifs auxquels participe $R_L$.

Dès que l'on appuie sur une touche de sélection d'humidité un programme de séchage est sélectionné. La sortie $A_9$ du microprocesseur envoie au transistor $T_5$ du circuit de sécurité et de contrôle 33, toutes les secondes, un niveau haut ($A_9=1$). Le transistor $T_5$ est alors saturé pendant un bref instant pendent lequel il simule le passage d'une charge de linge humide entre les électrodes de mesure d'humidité: le microprocesseur reçoit alors de 32 un signal logique (dont l'élaboration est expliquée ci-dessous) qui permet de tester régulièrement le circuit 31.

Lorsque le tambour tourne, la mesure d'humidité par mesure de la résistance réelle $R_L$ s'effectue au rythme de sa rotation, toutes les secondes environ. Chaque fois que les électrodes sont "en l'air", le transistor $T_3$ se trouve bloqué; le transistor $T_4$ l'est aussi et le condensateur $C_1$ se trouve chargé sous $V_{cc}$. Toutes les fois que le linge à sécher retombe entre les deux électrodes, une certaine résistance $R_L$ est mesurée selon l'état du linge. Le transistor $T_3$ conduit et offre un circuit de décharge au condensateur $C_1$ par la résistance $R_{40}$ et la diode $D_{41}$. Le transistor $T_4$ conduit et fournit une information logique sur $I_2$. Cette entrée $I_2$ est testée tous les cinquantièmes de seconde par le microprocesseur. Si aucune information n'est fournie au microprocesseur pendant à 2 minutes par exemple, on considère que le degré de séchage choisi est atteint; une certaine durée de la vérification de l'absence d'information est nécessaire pour éviter l'effet néfaste de parasites.

Le circuit 32 réalise la mesure des températures $\theta^\circ_S$ et $\theta^\circ_E$ simultanément, sur demande de la sortie $A_{10}$ du microprocesseur, et ce, pendant que la sortie $A_9$ est au niveau bas. En effet, lorsque $A_9=0$, le transistor $T_6$ est bloqué si bien que les transistors $T_7$ et $T_8$ sont saturés et court-circuitent les résistances élevées que sont $R_{50}$ et $R_{51}$.

Lorsque la sortie $A_{10}$ du microprocesseur demande la mesure des potentiels aux points A et B représentatifs des valeurs de $\theta^\circ_S$ et $\theta^\circ_E$, ces mesures se font convenablement à travers les transistors $T_9$ et $T_{10}$ saturés. Les valeurs correspondant aux températures $\theta^\circ_E$ et $\theta^\circ_S$ d'entrée et de sortie apparaissent respectivement alors en $K_1$ et $K_2$ sur des entrées du microprocesseur. Elles y sont comparées avec la valeur Kréf élaborée par le pont de résistances $R_{52}$, $R_{53}$.

La valeur de consigne de $\theta^\circ_E$, qui sert de sécurité, est toujours la même. La valeur de consigne de $\theta^\circ_S$ prend l'une ou l'autre de deux valeurs selon que l'on a sélectionné le programme "sec" ou "ultra-sec"; ces deux valeurs sont obtenues par des ponts de résistances dont le choix se fait sur demande de la sortie $A_{12}$ du microprocesseur ($A_{12}=0$ ou $A_{12}=1$).

Enfin le circuit de sécurité et de contrôle 33 permet, lorsque son entrée (sortie $A_9$ du microprocesseur) est au niveau haut ($A_9=1$) de faire plusieurs vérifications. Il permet non seulement, de vérifier le circuit 31, mais encore de vérifier les détecteurs de température $^\circ_S$ et $^\circ_E$.

En effet lorsque $A_9=1$ le transistor $T_6$ conduit; les transistors $T_7$ et $T_8$ sont bloqués. Les résistances $R_{50}$ et $R_{51}$ de valeur ohmique élevée devant la valeur des autres éléments, dont les thermistances, avec lesquels elles sont en série entre $+V_{cc}$ et la masse font considérablement monter le potentiel des points A et B. Si les thermistances mesurant $\theta^\circ_S$ et $\theta^\circ_E$ sont convenablement connectées, cette montée importante de potentiel apparaît sur les entrées $K_1$ et $K_2$ du microprocesseur. Si par contre, par accident l'une ou l'autre des deux thermistances est mal connectée, sa résistance est trop élevée pour que ces potentiels s'élèvent. Le microprocesseur commande alors de passage en phase refroidisement.

On peut encore noter que pour une anomalie telle que l'une des deux thermistances soit en court-circuit, le passage en cycle de refroidissement se fait automatiquement sans qu'intervienne le circuit de sécurité et de contrôle 33. En effet une thermistance en court-circuit correspond pour le microprocesseur à une température $\theta^\circ_E$ ou $\theta^\circ_S$ au-dessus des valeurs de consigne des différents programmes, quels qu'ils soient, et le microprocesseur assimile cette information à une fin du cycle de séchage.

On a vu, tout au long de la description qui vient d'être faite comment l'utilisation d'un programmateur électronique donnait de la souplesse au fonctionnement d'un sèche-linge et permettait de tirer profit de la combinaison de plusieurs méthodes de mesure de l'humidité résiduelle dans le linge.

**Revendications**

1. Sèche-linge à tambour tournant dans lequel est envoyé de l'air chaud pendant le cycle de séchage proprement dit et utilisant pour déterminer le pourcentage d'humidité restant dans le linge et arrêter ce cycle de séchage lorsqu'est atteint un pourcentage déterminé, d'une part, pour les programmes aboutissant aux pourcentages d'humidité les plus élevés, un procédé de mesure de la résistance électrique ($R_L$) du linge et, d'autre part, pour les programmes aboutissant aux pourcentages d'humidité les moins élevés un procédé de mesure faisant appel à la température ($\theta^\circ_S$) de l'air sortant du tambour, caractérisé en ce qu'il est commandé par un programmateur tel que lorsqu'est sélectionné un programme dont l'interruption est commandée en fonction de la température ($\theta^\circ_S$) de l'air sortant du tambour, le cycle de séchage est arrêté, lorsqu'est atteinte la température ($\theta^\circ_S$) de l'air sortant du tambour correspondant à la valeur de consigne sélectionnée si, et seulement si, il a été constaté que la résistance électrique du linge était préalablement passée par la valeur de consigne correspondant au programme aboutissant aux plus faibles taux d'humidité et faisant appel à la mesure de ladite résistance électrique du linge.

2. Sèche-linge selon la revendication 1, caractérisé en ce que le programmateur est du type électronique à microprocesseur (1) recevant des ordres d'au moins deux groupes de moyens de sélection de programme, un premier groupe (24) de moyens de sélection agissant sur des circuits (31) de mesure de la résistance électrique ($R_L$) du linge et un deuxième groupe (25) de moyens de sélection agissant sur des circuits de mesure de la température ($\theta°_S$) de l'air sortant du tambour, les informations ($I_2$, $K_1$, $K_2$) délivrées par les uns ou les autres de ces circuits, selon qu'ont été actionnés les moyens de sélection de programme du premier ou du deuxième groupe, étant utilisées pour commander le fonctionnement des différents organes (13, 14, 15) du sèche-linge et arrêter le cycle de sèche proprement dit lorsqu'est atteint le pourcentage d'humidité choisi.

3. Sèche-linge selon la revendication 2, caractérisé en ce qu'il comporte un troisième groupe (28') de moyens de sélection de programmes de séchage agissant sur des moyens de minuterie tels que la durée du cycle de séchage proprement dit soit fixe et prédéterminée par le choix du moyen de sélection actionné.

4. Sèche-linge selon l'une des revendications 1 à 3, caractérisé en ce qu'il comporte une cycle de refroidissement automatiquement enclenché dès la fin du cycle de séchage proprement dit, cette fin du cycle de séchage commandant la mise hors-circuit des moyens de chauffage de l'air circulant dans le tambour et laissant cet air circuler dans le tambour en rotation pendant une durée prédéterminée qui est la durée du cycle de refroidissement.

5. Sèche-linge selon la revendication 4, caractérisé en ce que des témoins (26, 27, 28), tels que des diodes électroluminescentes (LED), sont activés un bref instant à des intervalles de temps prédéterminés du cycle de refroidissement, indiquant le temps qui reste à s'écouler jusqu'à la fin de ce cycle où le linge est prêt à être sorti du sèche-linge, un de ces témoins étant activé à la fin de ce cycle.

6. Sèche-linge selon la revendication 4 ou 5, caractérisé en ce que le cycle de refroidissement est suivi d'un cycle dit de "défroissage" pendant lequel le linge, prêt à être sorti dès la fin du cycle de refroidissement, continue à tourner dans le tambour en rotation, les moyens de ventilation (14) ayant été mis hors-circuit dès la fin du cycle de refroidissement, ce cycle de défroissage évitant au linge de se refroisser en attendant sa sortie du sèche-linge.

7. Sèche-linge selon la revendication 6, caractérisé en ce qu'à des instants réguliers prédéterminés du cycle de défroissage, est engendré un signal sonore (18), prévenant l'utilisateur que le linge est prêt.

8. Sèche-linge selon la revendication 7, caractérisé en ce que le clavier de commande (2) comporte une touche (22) pour inhiber le fonctionnement du générateur de signal sonore (18).

9. Sèche-linge selon la revendication 2, caractérisé en ce que les moyens de sélection des différents groupes (24, 25, 28') de sélection de programmes de séchage comprennent des touches, disposées sur le tableau de commande (2) du sèche-linge, qui sont associées à des témoins lumineux tels que des diodes électroluminescentes (LED), et sont connectés au microprocesseur (1) contenant, dans des mémoires mortes (ROM), les différents programmes de séchage susceptibles d'être sélectionnés.

10. Sèche-linge selon l'une quelconque des revendications précédentes, caractérisé en ce qu'il comporte une sécurité générale consistant à régulièrement comparer l'information de la température ($\theta°_S$) de l'air chaud sortant du tambour à la valeur de consigne maximale correspondant au programme le plus sec (ultra-sec), même si un autre programme de séchage a été sélectionné, et à passer automatiquement à un cycle de refroidissement si la valeur de cette température ($\theta°_S$) dépasse la valeur de consigne de ce programme ultra-sec.

11. Sèche-linge selon l'une quelconque des revendications précédentes, caractérisé en ce qu'il comporte en outre des moyens de prélèvement de la température ($\theta°_E$) de l'air chaud entrant dans le tambour, et des moyens pour comparer cette température à une valeur de consigne prédéterminée, le dépassement de cette valeur de consigne provoquant le passage automatique en un cycle de refroidissement.

12. Sèche-linge selon la revendication 2, caractérisé en ce qu'il comporte un programme de test du bon fonctionnement du sèche-linge, ce programme de test étant mis en route par une commande codée consistant à actionner simultanément au moins deux moyens prédéterminés de sélection de programme.

13. Sèche-linge selon la revendication 2, caractérisé en ce que son programmateur électronique comporte, organisés autour d'un microprocesseur (1) à mémoires incorporées alimenté par des circuits d'alimentation (3, 4, 5, 6, 7) classiques en eux-mêmes et commandé, de façon également connue en soi, par une horloge (10), un circuit (11) de synchronisation secteur et un circuit (9) d'initialisation ou de réinitialisation (reset):

— un tableau (2) comportant les différents groupes de moyens de sélection de programmes, et témoins lumineux, ainsi qu'une touche marche-arrêt (21);
— des moyens de détection de la température ($\theta°_E$) de l'air entrant dans le tambour, de la température ($\theta°_S$) de l'air sortant du tambour et de la résistance électrique ($R_L$) du linge;
— des circuits (12) d'interface entre ces moyens de détection ($\theta°_E$, $\theta°_S$, $R_L$) et le microprocesseur;
— un circuit (17) recevant les instructions que le microprocesseur transmet aux organes du sèche-linge assurant le séchage-moteur (15) d'entraînement du tambour, ventilateur (14), moyens (13) de chauffage de l'air ventilé— et les traitant pour les rendre utilisables par les moyens de commande (16) de ces différents organes.

14. Sèche-linge selon la revendication 13, caractérisé en ce qu'il comporte en outre des moyens (18) de production d'un signal sonore à des instants prédéterminés du programme en cours de déroulement, et une touche d'inhibition de ce signal sonore disposée sur le tableau (2).

15. Sèche-linge selon la revendication 13 ou 14, caractérisé en ce que les circuits d'interface (12) comportent:

— un premier circuit (31) de mesure de la résistance $(R_L)$ du linge par des électrodes disposées dans le tambour tournant, mis en circuit par le premier groupe (24) de moyens de sélection de programmes, ce premier circuit (31) délivrant à une entrée $(I_2)$ du microprocesseur (1) une information caractéristique de la valeur de cette résistance $(R_L)$;

— un deuxième circuit (32) de mesure de la température $(\theta°_E)$ de l'air entrant dans le tambour et de la température $(\theta°_S)$ de l'air sortant du tambour, par des thermistances disposées respectivement sur le passage de l'air entrant et sortant du tambour, mis en circuit, notamment, par le deuxième groupe (25) de moyens de sélection de programmes, ce deuxième circuit (32) délivrant à des entrées $(K_1, K_2)$ du microprocesseur (1) des informations caractéristiques des valeurs de ces températures;

— un troisième circuit (33), participant en partie aux deux premiers (31 et 32), permettant de réaliser, sur demande du microprocesseur, des vérifications de bon fonctionnement des premier (31) et deuxième (32) circuits.

16. Sèche-linge selon la revendication 15, caractérisé en ce que le premier circuit (31) des circuits d'interface (12) comporte autant de ponts résistifs incorporant la résistance $(R_L)$ du linge que le premier groupe (24) de moyens de sélection de programme a de choix possibles, l'actionnement de l'un ou l'autre de ces moyens de sélection du premier groupe (24) commandant, à travers le microprocesseur (1) la commutation de l'un ou l'autre de ces ponts résistifs de manière à comparer la résistance du linge à la valeur de consigne correspondante; le signal résultant du linge à la valeur de consigne correspondante; le signal résultant de cette comparaison (point C) est mis en forme par un circuit à transistors $(T_3, T_4)$ et condensateur $(C_1)$ pour donner sur l'entrée $(I_2)$ du microprocesseur (1) un signal logique indiquant que la valeur de consigne choisie est, ou n'est pas, atteinte.

17. Sèche-linge selon la revendication 15 ou 16, caractérisé en ce que le microprocesseur (1) n'arrête le cycle de séchage proprement dit que lorsqu'il a vérifié pendant un temps prédéterminé que la valeur de consigne prédéterminée était atteinte, ce temps étant suffisant pour éviter la prise en compte d'informations dues à des parasites.

18. Sèche-linge selon l'une des revendications 15 à 17, caractérisé en ce que le deuxième circuit (32) des circuits d'interface (12) comporte un pont résistif incorporant la thermistance de mesure de la température d'entrée $(\theta°_E)$ et autant de ponts résistifs incorporant la thermistance de mesure de la température de sortie $(\theta°_S)$ que le deuxième groupe (25) de moyens de sélection de programmes a de choix possibles, l'actionnement de l'un ou l'autre de ces moyens de sélection du deuxième groupe (25) commandant, à travers le microprocesseur (1) la commutation de l'un ou l'autre de ces ponts résistifs de manière à comparer la température $(\theta°_S)$ de l'air de sortie à la valeur de consigne correspondante.

19. Sèche-linge selon la revendication 18, caractérisé en ce que, le microprocesseur (1) utilisé comportant un circuit comparateur de valeurs analogiques, les valeurs caractéristiques des températures d'entrée $(\theta°_E)$ et de sortie $(\theta°_S)$ de l'air, sont appliquées sous forme analogique à des entrées $(K_1$ et $K_2)$ du microprocesseur où elles sont comparées à une tension de référence (K réf) ellemême appliquée à une autre entrée du microprocesseur.

20. Sèche-linge selon la revendication 19, caractérisé en ce que l'application aux entrées $(K_1$ et $K_2)$ du microprocesseur (1) des signaux représentant les valeurs des températures d'entrée $(\theta°_E)$ et de sortie $(\theta°_S)$ (points A et B) se fait sur commande d'une sortie $(A_{10})$ du microprocesseur qui rend conducteurs deux transistors $(T_9$ et $T_{10})$ interrupteurs dont les sorties sont respectivement connectées aux dites entrées $(K_1$ et $K_2)$ du microprocesseur.

21. Sèche-linge selon l'une des revendications 15 à 20, caractérisé en ce que le troisième circuit (33) des circuits d'interface (12) fonctionne en circuit de contrôle des premier (31) et deuxième (32) circuits des circuits d'interface (12) à des instants où ceux-ci ne délivrent pas au microprocesseur (1) les informations qu'ils mesurent, ce fonctionnement en circuit de contrôle du troisième circuit (33) se faisant sur demande d'une sortie $(A_9)$ du microprocesseur (1) et consistant:

— d'une part à vérifier le premier circuit (31) en débloquant un transistor $(T_5)$ interrupteur simulant une très faible valeur de résistance du linge $(R_L)$;

— d'autre part à vérifier que les thermistances du deuxième circuit (32) sont convenablement connectées en venant mettre en circuit dans les ponts de résistances contenant ces deux thermistances deux résistances $(R_{50}$ et $R_{51})$ de valeur élevée connectées en parallèle sur deux transistors $(T_7$ et $T_8)$ conducteurs lors des mesures réelles des thermistances et bloqués lors de ces mesures de contrôle par le troisième circuit (33); la mise en circuit de ces résistances de valeur élevée augmente sensiblement le potentiel des points de mesure (A et B) et des signaux appliqués aux entrées (K₁ et K₂) du microprocesseur si les thermistances sont convenablement connectées; si par contre ces thermistances présentent un défaut de connexion les assimilant l'une ou l'autre à un circuit ouvert, la mise en circuit des deux résistances ($R_{50}$ et $R_{51}$) de valeur élevée laisse les potentiels de ces points de mesure (A et B) pratiquement inchangés;

— dans le cas d'une défaillance constatée par le microprocesseur sur l'un ou l'autre des premier (31) et deuxième (32) circuits sur cette action du troisième (33) circuit, le microprocesseur interrompt le cycle de séchage proprement dit.

**Patentansprüche**

1. Wäschetrockner mit einer Drehtrommel, in welchen während des eigentlichen Trockenzyklus Heissluft eingeleitet wird und bei dem zwecks Bestimmung des in der Wäsche verbleibenden Feuchtigkeitsgehaltes und zwecks Unterbrechung dieses Trockenzyklus bei Erreichung eines bestimmten Feuchtigkeitsgehalts einerseits für die die höchsten Feuchtigkeitsgehalte erzielenden Programme ein Verfahren zur Messung des elektrischen Widerstandes ($R_l$) der Wäsche und andererseits für die die niedrigsten Feuchtigkeitsgehalte erzielenden Programme ein Messverfahren angewandt wird, das die Temperatur der aus der Trommel austretenden Luft ($\theta°_s$) einbezieht, dadurch gekennzeichnet, dass er von einem Programmiergerät gesteuert wird, derart, dass bei Wahl eines Programms, das in Abhängigkeit von der Temperatur ($\theta°_s$) der aus der Trommel austretenden Luft unterbrochen wird, die Unterbrechung des Trockenzyklus erfolgt, wenn diejenige Temperatur ($\theta°_s$) der aus der Trommel austretenden Luft erreicht wird, die dem gewählten Sollwert entspricht unter der ausschliesslichen Bedingung, dass festgestellt wurde, dass der elektrische Widerstand der Wäsche zuvor den Sollwert durchquert hat, der dem die niedrigsten Feuchtigkeitsgehaltwerte erzielenden Programm entspricht, unter Einbeziehung der Messung dieses elektrischen Widerstandes der Wäsche.

2. Wäschetrockener nach Anspruch 1, dadurch gekennzeichnet, dass das Programmiergerät vom elektronischen, ein Mikroauswertegerät umfassenden Typ ist, das Befehle von wenigstens zwei Gruppen von Programmwahlmitteln empfängt, wobei eine erste Programmwahlmittelgruppe (24) auf Stromkreise (31) zur Messung des elektrischen Widerstands ($R_L$) der Wäsche und eine zweite Programmwahlmittelgruppe (25) auf Stromkreise zur Messung der Temperatur ($\theta°_s$) der aus der Trommel austretenden Luft einwirkt und die von jedwelchen dieser Stromkreise abgegebenen Informationen ($I_2$, $K_1$, $K_2$) je nachdem die Programmwahlmittel der ersten oder der zweiten Gruppe betätigt wurden, zur Steuerung der verschiedenen Organe (13, 14, 15) des Wäschetrockners und zur Unterbrechung des eigentlichen Trockenzyklus benutzt werden, wenn der gewählte Feuchtigkeitsgrad erreicht ist.

3. Wäschetrockner nach Anspruch 2, dadurch gekennzeichnet, dass er eine dritte Gruppe (28') von Trocknungsprogrammwahlmitteln aufweist, die auf Zeitgebermittel einwirken, derart, dass die Dauer des eigentlichen Trockenzyklus festgelegt und durch die Wahl des betätigten Wahlmittels vorbestimmt ist.

4. Wäschetrockner nach einem der Ansprüche 1 bis 3, dadurch gekennzeichnet, dass er einen bei der Beendigung des eigentlichen Trockenzyklus ausgelösten Kühlzyklus aufweist, wobei die Beendigung des Trockenzyklus die Mittel zur Erwärmung die Trommel durchströmenden Luft ausschaltet und diese Luft während einer bestimmten Zeitspanne in der sich drehenden Trommel belässt, welche Zeitspanne der Dauer des Kühlzyklus entspricht.

5. Wäschetrockner nach Anspruch 4, dadurch gekennzeichnet, dass während des Kühlzyklus in bestimmten Zeitabständen Anzeigemittel (26, 27, 28), wie elektrische Leuchtdioden, kurzzeitig betätigt werden und somit die Zeitspanne anzeigen, die bis zur Beendigung dieses Zyklus verbleibt, nach welcher die Wäsche aus dem Trockner entfernt werden kann, wobei eines dieser Anzeigemittel bei Beendigung dieses Zyklus betätigt wird.

6. Wäschetrockner nach Anspruch 4 oder 5, dadurch gekennzeichnet, dass dem Kühlzyklus eine sogenannte "Glättungszyklus" folgt, während dessen die bei der Beendigung des Kühlzyklus aus dem Trockner entfernbare Wäsche weiterhin in der sich drehenden Trommel gedreht wird, während die Belüftungsmittel (14) bei Beendigung des Kühlzyklus abgeschaltet wurden, wobei dieser Glättungszyklus verhütet, dass sich die Wäsche vor ihrer Entfernung aus dem Wäschetrockner wieder verknittert.

7. Wäschetrockner nach Anspruch 6, dadurch gekennzeichnet, dass zu vorbestimmten, regelmässigen Zeitpunkten des Glättungszyklus ein akustisches Signal erzeugt wird, das dem Benutzer anzeigt, dass die Wäsche bereit ist.

8. Wäschetrockner nach Anspruch 7, dadurch gekennzeichnet, dass die Bedienungstastatur (2) eine Taste (22) zur Verhinderung der Betätigung des Erzeugers des akustischen Signals umfasst.

9. Wäschetrockner nach Anspruch 2, dadurch gekennzeichnet, dass die Mittel zum Wählen der verschiedenen Trockenprogrammgruppen (24, 25, 28') an der Bedinungstafel (2) des Wäschetrockners angeordente Tasten umfassen, die Leuchtanzeigemitteln, wie elektrischen Leuchtdioden (LED) beigeordnet und mit dem Mikroauswertegerät (1) verbunden sind, welches die verschiedenen wählbaren Trockenprogramme in Totspeichern (ROM) enthält.

10. Wäschetrockner nach einem der vorstehenden Ansprüche, dadurch gekennzeichnet, dass er allgemeine Sicherungsmittel umfasst, die darin bestehen, dass die Temperatur ($\theta°_S$) der aus der Trommel austretenden Heissluft betreffenden Informationen mit dem maximalen, dem Höchsttrockenprogramm (Ultratrockenprogramm) entsprechenden Höchstsollwert regelmässig verglichen werden, selbst wenn ein anderes Trockenprogramm gewählt wurde, und ferner darin, dass automatisch der Übergang auf einen Kühlzyklus bewirkt wird, wenn diese Temperatur ($\theta°_S$) den Sollwert dieses Ultratrockenprogramms überschreitet.

11. Wäschetrockner nach einem der vorstehenden Ansprüche, dadurch gekennzeichnet, dass er ferner Mittel zur Messung der Temperatur ($\theta°_E$) der in die Trommel eintretenden Heissluft umfasst, sowie Mittel zum Vergleichen dieser Temperatur mit einem vorbestimmten Sollwert, wobei ein Überschreiten dieses Sollwertes automatisch den Übergang auf einen Kühlzyklus auslöst.

12. Wäschetrockner nach Anspruch 2, dadurch gekennzeichnet, dass er ein Testprogramm zur Prüfung des einwandfreien Arbeitens des Wäschetrockners umfasst, wobei dieses Testprogramm durch eine verschlüsselte Steuerung ausgelöst wird, die darin besteht, dass gleichzeitig wenigstens zwei vorbestimmte Programmwahlmittel betätigt werden.

13. Wäschetrockner nach Anspruch 2, dadurch gekennzeichnet, dass sein elektronisches Programmiergerät folgende Bauteile, die um ein mit Speichern versehenes, durch an sich bekannte Speisestromkreise (3, 4, 5, 6, 7) gespeistes und in ebenfalls an sich bekannter Weise durch einen Taktgeber (10) einen Netzsynchronisationsstromkreis (11) und einen Auslöse-oder Neuauslösestromkreis (reset) gesteuertes Mikroauswertegerät (1) gruppiert sind:

— eine Bedienungstafel (2) mit den verschiedenen Programmwahlmittelgruppen und Leuchtanzeigemitteln, sowie mit einer EIN-AUS Taste (21);
— Mittel zum Messen der Temperatur ($\theta°_S$) der aus der Trommel austretenden Luft und des elektrischen Widerstands ($R_L$) der Wäsche;
— Zwischenstromkreise (12) zwischen diesen Messmitteln ($\theta°_E$, $\theta°_S$, $R_L$) und dem Mikroauswertegerät;
— einen Stromkreis (17), der die vom Mikroauswertegerät an die Wäcshetrocknerorgane übertragenen Befehle empfängt hinsichtlich des Trocknens, des Antriebsmotors (15) der Trommel, des Ventilators (14), der der Mittel zur Erwärmung der Ventilationsluft, wobei dieser Stromkreis diese Befehle verarbeitet, um sie für die Mittel (16) zur Steuerung dieser verschiedenen Organe verwendbar zu machen.

14. Wäschetrockner nach Anspruch 13, dadurch gekennzeichnet, dass er ferner Mittel (18) zur Erzeugung eines akustischen Signals zu bestimmten Zeitpunkten des jeweiligen Programms aufweist, sowie eine auf der Bedienungstafel (2) angeordnete Taste zur Unterbindung dieses akustischen Signals.

15. Wäschetrockner nach Anspruch 13 oder 14, dadurch gekennzeichnet, dass die Zwischenstromkreise umfassen:

— einen ersten Stromkreis (31) zur Messung des Widerstandes ($R_L$) der Wäsche vermittels in der Drehtrommel angeordneter Elektroden, wobei dieser erster Stromkreis durch die erste Programmwahlmittelgruppe (24) eingeschaltet wird und an einen Eingang ($I_2$) des Mikroauswertegerätes (1) eine den Wert dieses Widerstandes ($R_L$) kennzeichnende Information überträgt;
— einen zweiten Stromkreis (32) zur Messung der Temperatur ($\theta°_E$) der in die Trommel eintretenden Luft und der Temperatur ($\theta°_S$) der aus der Trommel austretenden Luft vermittels im Strömungsweg der in die Trommel eintretenden bzw. aus der Trommel austretenden Luft angeordneter Heissleiter, wobei dieser zweite Stromkreis insbesondere durch die zweite Programmwahlmittelgruppe (25) eingeschaltet wird und an Eingänge ($K_1$, $K_2$) des Mikroauswertegeräts (1) die Werte dieser Temperaturen kennzeichnende Informationen überträgt;
— einen teilweise den beiden ersten Stromkreisen (31 und 32) zugehörigen dritten Stromkreis (33), der es gestattet, auf Veranlassung des Mikroauswertegeräts das einwandfreie Arbeiten des ersten (31) und zweiten (32) Stromkreises zu prüfen.

16. Wäschetrockner nach Anspruch 15, dadurch gekennzeichnet, dass der erste Stromkreis (31) der Zwischenstromkreise (12) ebensoviel den Widerstand ($R_L$) der Wäsche beinhaltende Widerstandsbrücken umfasst wie die erste Gruppe (24) von Programmwahlmitteln Wahlmöglichkeiten besitzt, wobei die Betätigung jedweden Wahlmittels der erste Gruppe (24) über das Mikroauswertegerät (1) die Schaltung einer der Widerstandsbrücken steuert, derart, dass der Widerstand mit dem entsprechenden Sollwert verglichen wird, und wobei das durch diesen Vergleich erzeugte Signal (Punkt C) durch einen Transistor-Kondensatorstromkreis ($T_3$, $T_4$, $C_1$) geformt wird, derart, dass am Eingang ($I_2$) des Mikroauswertegeräts (1)—ein logisches Signal erscheint, welches anzeigt, dass der gewählte Sollwert erzielt oder nicht erzielt ist.

17. Wäschetrockner nach Anspruch 15 oder 16, dadurch gekennzeichnet, dass das Auswertegerät (1) den eigentlichen Trockenzyklus erst dann unterbricht, wenn es während einer vorbestimmten Zeitspanne sichergestellt hat, dass der vorbestimmte Sollwert erreicht ist, wobei diese Zeitspanne hinreichend bemessen ist, um zu verhindern, dass durch Störungen hervorgerufene Informationen in Betracht gezogen werden.

18. Wäschetrockner nach einem der Ansprüche 15 bis 17, dadurch gekennzeichnet, dass der zweite Stromkreis (32) der Zwischenstromkreise (12) einen den die Eingangstemperatur ($\theta°_E$) messenden Heissleiter umfaste, sowie ebensoviel die Ausgangstemperatur ($\theta°_S$) messende Heissleiter aufweisende Widerstandsbrücken wie die zweite Programmwahlmittelgruppe (25) Wahlmöglichkeiten besitzt, wobei die Betätigung dieser Wahlmittel der zweiten Gruppe (25) über das Mikroauswertegerät (1) die Schaltung jedweder dieser Widerstandsbrücken derart steuert, dass die Temperatur ($\theta°_S$) der austretenden Luft mit dem entsprechenden Sollwert verglichen wird.

19. Wäschetrockner nach Anspruch 18, dadurch gekennzeichnet, dass das benutzte Mikroauswertegerät (1) einen die Analogwerte vergleichenden Stromkreis aufweist und die die Einlasstemperaturen ($\theta°_E$) und die Auslasstemperaturen ($\theta°_S$) kennzeichnenden Werte in Analogform an Eingänge ($K_1$, $K_2$) des Mikroauswertegeräts angelegt sind, wo sie mit einer an einen anderen Eingang des Mikroauswertegeräts angelegten Bezugsspannung (K ref) verglichen werden.

20. Wäschetrockner nach Anspruch 19, dadurch gekennzeichnet, dass das Anlegen der die Einlasstemperaturen ($\theta°_E$) und Auslasstemperaturen ($\theta°_S$) darstellenden Signale an die Eingänge ($K_1$ und $K_2$) des Mikroauswertegeräts (1) gemäss der Steuerung durch einen Ausgang ($A_{10}$) des Mikroauswertegeräts erfolgt, wobei zwei Schalttransistoren ($T_9$ und $T_{10}$) leitfähig gemacht werden, deren Ausgänge an je einen der genannten Eingänge ($K_1$ und $K_2$) des Mikroauswertegeräts angeschlossen sind.

21. Wäschetrockner nach einem der Ansprüche 15 bis 20, dadurch gekennzeichnet, dass der dritte Stromkreis (33) der Zwischenstromkreise (12) als Kontrollstromkreis wirkt, der den ersten (31) und den zweiten (32) Stromkreis der Zwischenstromkreise (12) zu jenen Zeitpunkten kontrolliert während derer diese Stromkreise dem Mikroauswertegerät (1) die von ihnen gemessenen Information nicht übermitteln, wobei diese Kontrollstromkreisfunktion des dritten Stromkreises (33) auf Befehl eines Ausganges ($A_9$) des Mikroauswertegeräts (1) eintritt, und folgende Arbeitsphasen umfasst:

— einerseits die Prüfung des ersten Stromkreises (31) durch Freigabe eines Schalttransistors ($T_5$) mit Simulation eines sehr niedrigen Widerstandswertes der Wäsche ($R_L$);

— andererseits die Prüfung der geeigneten Schaltung der Heissleiter des zweiten Stromkreises (32) durch Einschalten, in die diese beiden Heissleiter umfassenden Widerstandsbrücken, von zwei hochwertigen Widerständen ($R_{50}$ und $R_{51}$), die mit zwei Transistoren ($T_7$ und $T_8$) parallel geschaltet sind, welche während der Messung der wirklichen Werte der Heissleiter leitfähig und während der durch den dritten Stromkreis (33) erfolgenden Kontrollmessungen gesperrt sind, wobei die Einschaltung dieser hochwertigen Widerstände das Potential der Messstellen (A und B) und der an die Eingänge ($K_1$ und $K_2$) des Mikroauswertegeräts angebrachten Signale wesentlich erhöht wird, wenn die Heissleiter in geeigneter Weise geschaltet sind, während, falls hingegen dieser Heissleiter hinsichtlich ihrer Zusammenschaltung oder hinsichtlich eines offenen Stromkreises fehlerhaft sind, bei Einschaltung der beiden hochwertigen Widerstände ($R_{50}$ und $R_{51}$) die Potentiale dieser Messstellen (A und B) praktisch unverändert bleiben;

— automatische Unterbrechung des eigentlichen Trockenzyklus durch das Mikroauswertegerät wenn das Mikroauswertegerät aufgrund dieser Wirkungsweise des dritten Stromkreises (33) einen Fehler des ersten oder zweiten Stromkreises (31 bzw. 32) feststellt.

**Claims**

1. A rotating drum clothes dryer into which is introduced hot air during the drying cycle per se and in which to determine the percentage of humidity remaining within the clothes and to interrupt this drying cycle when a determined percentage is achieved, is used on the one hand, for programmes attaining the highest humidity percentages, a process for measuring the electric resistance ($R_L$) of the clothes and, on the other hand, for programmes attaining the lowest humidity percentages, a measuring process using the temperature ($\theta°_S$) of the air exiting from the drum, characterized in that it is controlled by an automatic control so that when a programme is selected of which the interruption is controlled in function of the temperature ($\theta°_S$) of the air leaving the drum, the drying cycle is interrupted, when reaching the temperature ($\theta°_S$) of the air leaving the drum corresponding to the selected reference value if, and only if, it has been established that the electric resistance of the clothes was previously exceeded by the reference value corresponding to the programme attaining the lowest rates of humidity and using the measurement of the said electric resistance of the clothes.

2. Clothes dryer according to claim 1, characterized in that the automatic control is of the electronic type with microprocessor (1) receiving orders from at least two groups of programme selection means, a first group (24) of selection means acting on circuits (31) for measuring the electric resistance ($R_L$) of the clothes and a second group (25) of selection means acting on the measurement circuits of the temperature ($\theta°_S$) of the air leaving the drum, the data ($I_2$, $K_1$, $K_2$) delivered by one or other of the circuits, depending on whether were actuated the programme selection means of the first or of the second group, being utilized to control the functioning of the different elements (13, 14, 15) of the clothes dryer and to interrupt the drying cycle per se when the selected humidity percentage has been achieved.

3. Clothes dryer according to claim 2, characterized in that it comprises a third group (28') of means of selecting the drying programmes acting on the automatic timing means so that the duration of the drying cycle per se is fixed and predetermined by the choice of the actuated selection means.

4. Clothes dryer according to one of claims 1 to 3, characterized in that it comprises an automatically activated cooling cycling upon the end of the drying cycle per se, this end of the drying cycle controlling the cutting-out off the means for heating the air circulating in the drum and allowing this air to circulate in the drum in rotation for a predetermined duration that is the duration of the cooling cycle.

5. Clothes dryer according to claim 4, characterized in that the signals (26, 27, 28) such as electroluminescent diodes (ELD) are activated a brief instant at predetermined time intervals of the cooling cycle, indicating the time that remains to run until the end of this cycle where the clothes are ready to be taken out of the clothes dryer, one of these signals being activated at the end of this cycle.

6. Clothes dryer according to claim 4 or 5, characterized in that the cooling cycle is following by a cycle called "uncreasing" cycle during which the clothes, ready to be taken out at the end of the "smoothing out" cycle, continue to revolve in the rotating drum, the ventilation means (14) having been cut-out upon the end of the "smoothing out" cycle, this smoothing out cycle preventing the clothes from becoming creased again, while awaiting removal from the clothes dryer.

7. Clothes dryer according to claim 6, characterized in that at regular predetermined instants of the increasing cycle, is generated a resonant signal (18), advising the user that the clothes are ready.

8. Clothes dryer according to claim 7, characterized in that the control panel (2) comprises a key (22) to prevent operating of the generator of the resonant signal (18).

9. Clothes dryer according to claim 2, characterized in that the selection means of the different groups (24, 25, 28') for selecting the drying programmes comprise keys, disposed on the control panel (2) of the clothes-dryer, that are associated to luminous signals such as electroluminescent diodes (ELD), and are connected to the microprocessor (1) containing, in read-only memories (ROM) the different programmes able to be selected.

10. Clothes dryer according to any one of the preceding claims, characterized in that it comprises a general security consisting in regularly comparing the data of the temperature ($\theta°_S$) of the hot air leaving the drum to a maximal reference value corresponding to the dryest programme (ultra-dry), even if another drying programme has been selected, and in automatically passing to a cooling cycle if the value of this temperature ($\theta°_S$) exceeds the reference value of this ultra-dry programme.

11. Clothes dryer according to any one of the preceding claims, characterized in that it comprises further means for sampling the temperature ($\theta°_E$) of hot air entering the drum, and means for comparing this temperature to a predetermined reference value, the overstepping of this reference value provoking the automatic passage in a cooling cycle.

12. Clothes dryer according to claim 2, characterized in that it comprises a programme for testing the correct operating of the clothes dryer, this test programme being set in action by a coded control consisting in actuating simultaneously at least two predetermined means for selecting the programme.

13. Clothes dryer according to claim 2, characterized in that its electronic programmer comprises, organized about a microprocessor (1) with incorporated memories supplied by feed circuits (3, 4, 5, 6, 7) classic in themselves and controlled, also in a manner known per se, by a clock (10) a sector synchronization circuit (11) and an initialization or reset circuit (9):

— a table (2 comprising the different groups of programme selection means, and luminous signals as well as a go-stop key (21);
— means for detecting the temperature ($\theta°_E$) of the air entering the drum, of the temperature ($\theta°_S$) of the air leaving the drum and the electric resistance ($R_L$) of the clothes;
— the circuits (12) of the interface between these detection means ($\theta°_E$, $\theta°_S$, $R_L$) and the microprocessor;
— a circuit (17) receiving the instructions that the microprocessor transmits to the elements of the clothes dryer ensuring the clothes motor (15), driving the drum, ventilator (14), means (13) of heating the ventilated air- and processing them to render them usable by the control means (16) of these different elements.

14. Clothes dryer according to claim 13, characterized in that it comprises further the means (18) for producing a resonant signal at predetermined instants of the programme during motion, and a key prohibiting this resonant signal disposed on the table (2).

15. Clothes dryer according to claim 13 or 14, characterized in that the interface circuit (12) comprise:

—— a first circuit (31) for measuring the resistance $(R_L)$ of the clothes by the electrodes disposed in the rotating drum, put into circuit by the first group (24) of programme selection means, this first circuit (31) delivering at an input $(I_2)$ of the microprocessor (1) a characteristic data of the value of the resistance $(R_L)$;

— a second circuit (2) for measuring the temperature $(\theta°_E)$ of the air entering in the drum and the temperature $(\theta°_S)$ of the air exiting from the drum, by thermistances disposed respectively along the passage of the air entering and leaving the drum, put into circuit, especially by the second group (25) of programme selection means, this second circuit (32) delivering at the inputs $(K_1, K_2)$ of the microprocessor (1) characteristic data of the values of these temperatures;

— a third circuit (33), participating in part to the first two (31 and 32), allowing to realize, upon instructions from the microprocessor, verifications of the correct operating of the first (31) and the second (32) circuits.

16. Clothes dryer according to claim 15, characterized in that the first circuit (31) of the interface circuits (12) comprises as many resistive bridges incorporating the resistance $(R_1)$ of the clothes as the first group (24) of programme selection means has possible choices, the actuation of one or other of these selection means of the first group (24) controlling, through the microprocessor (1) the switching-over of one or other of these resistive bridges in such a way as to compare the resistance of the clothes to the corresponding reference value; the signal resulting from this comparison (point C) is formed by a circuit of transistors $(T_3, T_4)$ and capacitor $(C_1)$ to give on the input $(I_2)$ of the microprocessor (1) a logic signal indicating that the chosen reference value is, or has not yet been reached.

17. Clothes dryer according to claim 15 or 16, characterized in that the microprocessor (1) only interrupts the drying cycle per se when it has verified during a predetermined time that the predetermined reference value has been reached, this time being sufficient to prevent taking into account the data due to the disturbances.

18. Clothes dryer according to one of claims 15 to 17, characterized in that the second circuit (32) of the interface circuits (12) comprises a resistive bridge incorporating the measurement thermidistance of the input temperature $(\theta°_E)$ and as many resistive bridges incorporating the measurement thermidistance of the output temperature $(\theta°_S)$ as the second group (25) of programme selection means has possible choices, the actuation of one or other of these selection means of the second group (25) controlling, through the microprocessor (1) the switching over of one or other of these resistives bridges in such a way as to compare the temperature $(\theta°_S)$ of the output air to the corresponding reference value.

19. Clothes dryer according to claim 18, characterized in that the microprocessor (1) used comprising a comparator circuit of analogous values, the characteristic values of the input $(\theta°_E)$ and output $(\theta°_S)$ temperatures of the air, are applied in an analogous form at inputs $(K_1$ and $K_2)$ of the microprocessor where they are compared to a reference voltage (Kref), itself applied to another input of the microprocessor.

20. Clothes dryer according to claim 19, characterized in that the application at the inputs $(K_1$ and $K_2)$ of the microprocessor (1) of the signals representing the values of the input $(\theta°_E)$ and output $(\theta°_S)$ temperatures (points A and B) is carried out on instructions from an output $(A_{10})$ of the microprocessor that renders conductor two switch transistors $(T_9$ and $T_{10})$ of which the outputs are respectively connected to the said inputs $(K_1$ and $K_2)$ of the microprocessor.

21. Clothes dryer according to one of claims 15 to 20, characterized in that the third circuit (33) of the circuits of the interface (12) function in control circuit of the first (31) and second (32) circuits of the circuits of interface (12) at instants where they only deliver to the microprocessor (1) data that they measure, this operation in control circuit of the third circuit (33) being carried out on instructions from an output $(A_9)$ of the microprocessor (1) and consisting:

— on the one hand of verifying the first circuit (31) by unblocking a switch transistor $(T_S)$ simulating a very small resistance value of the clothes $(R_L)$;

— on the other hand, of verifying that the thermidistances of the second circuit (32) are suitably connected by putting in circuit in the resistance bridges containing these two thermidistances two resistances $(R_{50}$ and $R_{51})$ of high value connected in parallel on two conductor transistors $(T_7$ and $T_8)$ during real measurements of the thermidistances and blocked upon these control measurements by the third circuit (33); the putting into circuit of these high value resistances substantially increases the potential of the measuring points (A and B) and the signals applied to the inputs $(K_1$ and $K_2)$ of the microprocessor if the thermidistances are suitably connected; if, on the contrary, these thermidistances present a connection defect assimilating one or other to an open circuit, the putting in circuit of the two resistances

$(R_{50}$ and $R_{51})$ of high value leaves the potentials of these practically unchanged measuring points (A and B);
— in the case of a flow observed by the microprocessor on one or other of the first (31) and second (32) circuits on this action of the third circuit (33), the microprocessor interrupts the drying cycle per se.

# FIG_1

# FIG_2

FiG_3